# EUROPEAN PATENT APPLICATION

(11) **EP 4 512 777 A1**
(43) Date of publication of application: **26.02.2025**
(21) Application number: 23791921.2
(22) Date of filing: 20.04.2023
(51) Int. Cl.: C01G 39/00, C01G 33/00

(54) **NIOBATE PARTICLES AND METHOD FOR MANUFACTURING NIOBATE PARTICLES**

(30) Priority: 21.04.2022 JP 2022070228
(71) Applicant: DIC Corporation, Tokyo 174-8520 (JP)
(72) Inventor: YUAN Jianjun, Sakura-shi, Chiba 285-8668 (JP); TABUCHI Minoru, Sakura-shi, Chiba 285-8668 (JP); YAGI Naoto, Sakura-shi, Chiba 285-8668 (JP)
(74) Representative: Schön, Christoph
(86) International application number: PCT/JP2023/015803
(87) International publication number: WO 2023/204273

(57) **Abstract**

Niobate particles include molybdenum and are represented by KₓNa₍₁₋ₓ₎Nb_{y}O_{z}, where X = 0 to 1, y = 1 to 10, and z = 3 to 20. Preferably, the niobate particles are niobate particles including at least one selected from the group consisting of KₓNa₍₁₋ₓ₎NbO₃ particles having a cubic shape, K₂Nb₄O₁₁ particles having a columnar shape, a wire shape, or a ribbon shape, K₄Nb₆O₁₇ particles having a plate shape, and KNb₃O₈ particles having a columnar shape, a wire shape, or a ribbon shape.

## Description

### Technical Field

The present invention relates to niobate particles and a method for producing the niobate particles.

The present application claims priority to Japanese Patent Application No. 2022-070228, filed in Japan on April 21, 2022, the contents of which are incorporated herein by reference.

### Background Art

Niobates are widely used, for example, in piezoelectric materials, fillers, catalysts, and water purification materials.

Patent Literature 1 describes a method for producing a sodium-potassium-niobate-based lead-free piezoelectric ceramic. The method uses a spark plasma sintering method to produce the sodium-potassium-niobate-based lead-free piezoelectric ceramic.

Patent Literature 2 describes a method for producing sodium potassium niobate particles. The method uses a solvothermal reaction to produce the sodium potassium niobate particles.

Patent Literature 3 describes, in Examples, a method for producing sodium potassium niobate particles. In the method, raw material powders of Na₂CO₃, K₂CO₃, and Nb₂O₅ are used, and a mixture of the raw material powders is sintered at 1100°C for 2 hours and subsequently ground.

### Citation List

### Patent Literature

PTL 1: Japanese Unexamined Patent Application Publication No. 2007-022854
PTL 2: Japanese Unexamined Patent Application Publication No. 2010-241659
PTL 3: Japanese Unexamined Patent Application Publication No. 2020-145408

### Summary of Invention

### Technical Problem

Controlling the crystal shape of niobate particles, which affects the particle shape thereof, is a very important technique for enhancing the versatility of uses of the niobate particles. Unfortunately, the methods of Patent Literature 1 and 3 cannot easily control the shape of the particles, and in Patent Literature 2, a special solution method is employed, and, therefore, implementation is cumbersome.

The present invention has been made to solve the problem, and an object of the present invention is to provide niobate particles having a controlled particle shape.

### Solution to Problem

The present inventors diligently conducted studies to solve the problem and, consequently, discovered that using a molybdenum compound as flux enables easy control of the crystal shape of niobate particles that are produced and also enables the production of niobate particles that contain molybdenum. Accordingly, the present invention was completed.

Specifically, the present invention includes the following aspects.
(1) Niobate particles comprising molybdenum and being represented by KₓNa₍₁₋ₓ₎Nb_{y}O_{z}, where X = 0 to 1, y = 1 to 10, and z = 3 to 20.
(2) The niobate particles according to (1), wherein the niobate particles comprise at least one selected from the group consisting of
   KₓNa₍₁₋ₓ₎NbO₃ particles, where X = 0 to 1,
   K₂Nb₄O₁₁ particles,
   K₄Nb₆O₁₇ particles, and
   KNb₃O₈ particles.
(3) The niobate particles according to (2), wherein the niobate particles comprise at least one selected from the group consisting of
   KₓNa₍₁₋ₓ₎NbO₃ particles having a cubic shape, where X = 0 to 1,
   K₂Nb₄O₁₁ particles having a columnar shape, a wire shape, or a ribbon shape,
   K₄Nb₆O₁₇ particles having a plate shape, and
   KNb₃O₈ particles having a columnar shape, a wire shape, or a ribbon shape.
(4) The niobate particles according to (2) or (3), wherein the niobate particles comprise KₓNa₍₁₋ₓ₎NbO₃ particles having a cubic shape, and the KₓNa₍₁₋ₓ₎NbO₃ particles have a particle size of 0.1 to 100 µm.
(5) The niobate particles according to (2) or (3), wherein the niobate particles comprise K₂Nb₄O₁₁ particles having a columnar shape, a wire shape, or a ribbon shape, and the K₂Nb₄O₁₁ particles have a long length of 1.0 to 2000 µm, a short length of 0.05 to 100 µm, and an aspect ratio of 2 to 100, where the aspect ratio is a ratio of the long length to the short length.
(6) The niobate particles according to (2) or (3), wherein the niobate particles comprise K₄Nb₆O₁₇ particles having a plate shape, and the K₄Nb₆O₁₇ particles have a particle size of 1 to 1000 µm.
(7) The niobate particles according to (2) or (3), wherein the niobate particles comprise KNb₃O₈ particles having a columnar shape, a wire shape, or a ribbon shape, and the KNb₃O₈ particles have a long length of 10 to 10000 µm, a short length of 5 to 100 µm, and an aspect ratio of 2 to 100, where the aspect ratio is a ratio of the long length to the short length.
(8) The niobate particles according to any one of (1) to (7), wherein, in the niobate particles, a content of the molybdenum, in terms of a content percentage calculated as MoO₃, is 0.01 to 20 mass% as determined by an XRF analysis of the niobate particles, the content percentage being based on a total mass of the niobate particles taken as 100 mass%.
(9) The niobate particles according to any one of (1) to (8), wherein, in the niobate particles, a content of niobium, in terms of a content percentage calculated as Nb₂O₅, is 50 to 99 mass% as determined by an XRF analysis of the niobate particles, the content percentage being based on a total mass of the niobate particles taken as 100 mass%.
(10) The niobate particles according to any one of (1) to (9), wherein, in the niobate particles, a content of potassium and/or sodium, in terms of a total content percentage calculated as K₂O and Na₂O, is 0.5 to 40 mass% as determined by an XRF analysis of the niobate particles, the total content percentage being based on a total mass of the niobate particles taken as 100 mass%.
(11) A method for producing niobate particles, which is a method for producing the niobate particles according to any one of (1) to (10), the method comprising firing a niobium compound in the presence of a molybdenum compound and of a potassium compound and/or a sodium compound.
(12) The method for producing niobate particles according to (11), wherein the molybdenum compound is at least one compound selected from the group consisting of molybdenum trioxide, potassium molybdate, and sodium molybdate.
(13) The method for producing niobate particles according to (11) or (12), wherein the sodium compound is sodium carbonate or sodium molybdate, and the potassium compound is potassium carbonate or potassium molybdate.
(14) The method for producing niobate particles according to any one of (11) to 13, wherein a firing temperature for firing the niobium compound is 700 to 1500°C.
(15) The method for producing niobate particles according to any one of (11) to (14), the method comprising:
   a step of mixing the niobium compound with the molybdenum compound and with the potassium compound and/or the sodium compound to form a mixture; and
   a step of firing the mixture, wherein
   a molar ratio of molybdenum atoms to niobium atoms in the mixture, which is a molar ratio denoted as molybdenum/niobium, is 0.01 to 5.

### Advantageous Effects of Invention

The present invention can provide niobate particles having excellent properties derived from molybdenum and having a controlled particle shape.

### Brief Description of Drawings

[Fig. 1] Fig. 1 presents SEM images of niobate particles of Examples 1 to 6.
[Fig. 2] Fig. 2 presents SEM images of niobate particles of Reference Examples 1 and 2.
[Fig. 3] Fig. 3 shows X-ray diffraction (XRD) patterns of the niobate particles of Examples 1 to 6 and Reference Examples 1 and 2.
[Fig. 4] Fig. 4 is an enlarged view of the XRD patterns shown in Fig. 3.
[Fig. 5] Fig. 5 presents SEM images of niobate particles of Examples 7 to 12.
[Fig. 6] Fig. 6 presents SEM images of niobate particles of Examples 13 to 17.
[Fig. 7] Fig. 7 shows X-ray diffraction (XRD) patterns of the niobate particles of Examples 7 to 14.
[Fig. 8] Fig. 8 shows X-ray diffraction (XRD) patterns of the niobate particles of Examples 15 to 17.
[Fig. 9] Fig. 9 presents SEM images of niobate particles of Examples 18 and 19.
[Fig. 10] Fig. 10 shows X-ray diffraction (XRD) patterns of the niobate particles of Examples 18 and 19.
[Fig. 11] Fig. 11 presents SEM images of niobate particles of Examples 20 and 21.
[Fig. 12] Fig. 12 shows X-ray diffraction (XRD) patterns of the niobate particles of Examples 20 and 21. Description of Embodiments

Embodiments of niobate particles and a method for producing the niobate particles, according to the present invention, will be described below.

### <<Niobate Particles>>

According to an embodiment, niobate particles include molybdenum and are represented by KₓNa₍₁₋ₓ₎Nb_{y}O_{z}, where X = 0 to 1, y = 1 to 10, and z = 3 to 20.

The niobate particles of this embodiment include a niobate compound represented by KₓNa₍₁₋ₓ₎Nb_{y}O_{z}. In the formula KₓNa₍₁₋ₓ₎Nb_{y}O_{z}, 0 ≤ x ≤ 1. When 0 < x < 1, KₓNa₍₁₋ₓ₎Nb_{y}O_{z} represents sodium potassium niobate, when x = 0, KₓNa₍₁₋ₓ₎Nb_{y}O_{z} represents sodium niobate (NaNb_{y}O_{z}), and when x = 1, KₓNa₍₁₋ₓ₎Nb_{y}O_{z} represents potassium niobate (KNb_{y}O_{z}).

The niobate particles of this embodiment contain molybdenum and have excellent properties attributable to molybdenum, such as excellent catalytic activity.

In the niobate particles of this embodiment, the molybdenum present may be derived from a molybdenum compound used in a production method, which will be described later. Furthermore, the use of a molybdenum compound in the later-described production method enables excellent control of a particle shape of the niobate particles of this embodiment.

Regarding the molybdenum present in the niobate particles of this embodiment, a state of existence and an amount of the molybdenum are not particularly limited. Examples of molybdenum that may be present in the niobate particles include molybdenum metal, molybdenum oxide, and partially reduced molybdenum compounds. It can be assumed that the molybdenum present in the niobate particles is in the form of MoO₃. In addition to or in place of MoO₃, one or more other forms of molybdenum, such as MoO₂ and MoO, may be present in the niobate particles.

The form in which the molybdenum is present is not particularly limited, and any of the following forms are possible: a form in which molybdenum adheres to a surface of the niobate particles; a form in which molybdenum replaces a portion of the crystal structure of the niobate particles; an amorphous form; and a combination of any of these forms.

In the present specification, "the particle shape of the niobate particles is controlled" means that the particle shape of the produced niobate particles is not amorphous. In the present specification, "niobate particles having a controlled particle shape" means niobate particles having a particle shape that is not amorphous.

The niobate particles of this embodiment include at least one selected from the group consisting of
KₓNa₍₁₋ₓ₎NbO₃ particles, where X = 0 to 1,
K₂Nb₄O₁₁ particles,
K₄Nb₆O₁₇ particles, and
KNb₃O₈ particles.

Regarding the niobate present in the niobate particles of this embodiment, its type and composition can be determined from an XRD spectrum pattern obtained in an XRD analysis.

The production method of the embodiment described later provides excellent control of the shape of the niobate particles that are produced, with the control being in accordance with any of the crystal shapes corresponding to the respective compositions. The niobate particles of this embodiment have a controlled crystal shape and can have a distinct euhedral shape, such as a cubic shape, a plate shape, a columnar shape, a wire shape, or a ribbon shape. Niobate particles having any of these shapes can be produced by the production method described later.

The niobate particles of this embodiment may include at least one selected from the group consisting of
KₓNa₍₁₋ₓ₎NbO₃ particles having a cubic shape, where X = 0 to 1,
K₂Nb₄O₁₁ particles having a columnar shape, a wire shape, or a ribbon shape,
K₄Nb₆O₁₇ particles having a plate shape, and
KNb₃O₈ particles having a columnar shape, a wire shape, or a ribbon shape.

In the present specification, the term "cubic shape" may refer to a shape derived from the perovskite structure; the shape is preferably a shape of a hexahedron that is a rectangular parallelepiped or a cube, and each of the faces that constitute the hexahedron may be a flat face, a curved face, or an uneven face.

In the present specification, the "columnar shape" includes prismatic columnar shapes, cylindrical columnar shapes, rod shapes, and the like. A shape of a bottom face of the columnar body of columnar niobate particles is not particularly limited and may be, for example, a circular shape, an elliptical shape, a polygonal shape, or the like. The columnar shape includes shapes that extend linearly in a longitudinal direction, shapes that extend obliquely, shapes that extend in a curved manner, shapes that extend in a branched manner, and the like. The columnar shape is a shape having an aspect ratio of 2 or greater and less than 5, where the aspect ratio is a ratio of a long length to a short length.

In the present specification, regarding particles having a "wire shape", the shape of the bottom face is not particularly limited, as with the particles having a columnar shape, and may be, for example, a circular shape, an elliptical shape, a polygonal shape, or the like. The wire shape includes shapes that extend linearly in a longitudinal direction, shapes that extend obliquely, shapes that extend in a curved manner, shapes that extend in a branched manner, and the like. The wire shape is a shape having an aspect ratio of 5 or greater, where the aspect ratio is a ratio of a long length to a short length.

In the present specification, the "plate shape" includes a sheet shape. The faces that constitute a plate-shaped body may be a flat face, a curved face, or an uneven face.

In the present specification, the "ribbon shape" is a type of the columnar shape or the wire shape and one in which the shape of the bottom face is rectangular and in which an aspect ratio is 2 or greater, where the aspect ratio is a ratio of a long length to a short length. A ratio of a length of a long side to a length of a short side in the rectangle of the cross section is 1.2 or greater.

In the instance where the niobate particles include KₓNa₍₁₋ₓ₎NbO₃ particles having a cubic shape, a particle size of the particles is preferably 0.1 to 100 µm, more preferably 0.5 to 50 µm, and even more preferably 1 to 20 µm.

In the present specification, the "particle size" of niobate particles having a cubic shape is a length of a side of the hexahedron as determined from a particle image of a primary particle of the niobate particles in a two-dimensional image acquired with a scanning electron microscope (SEM).

The value of the size of the niobate particles having a cubic shape is an average of the values obtained from 50 or more niobate particles randomly selected from particles having a euhedral shape, which are particles of interest for the measurement.

In the instance where niobate particles having a cubic shape are present, it is preferable that 50% or more particles have a cubic shape, it is more preferable that 80% or more particles have a cubic shape, and it is even more preferable that 90% or more particles have a cubic shape, where the percentages are mass-based or number-based percentages.

As an amount of use of molybdenum, based on the amount of use of niobium, increases, and a firing temperature increases, it is more likely that KₓNa₍₁₋ₓ₎NbO₃ particles having a high value of the particle size can be obtained.

In the instance where the niobate particles include K₂Nb₄O₁₁ particles having a columnar shape, a wire shape, or a ribbon shape, the niobate particles may be, for example, those in which the K₂Nb₄O₁₁ particles have a long length of 1.0 to 2000 µm, a short length of 0.05 to 100 µm, and an aspect ratio of 2 to 100, where the aspect ratio is a ratio of the long length to the short length.

In the instance where the niobate particles include K₂Nb₄O₁₁ particles having a columnar shape, a wire shape, or a ribbon shape, the long length of the particles is preferably 1.0 to 2000 µm, more preferably 2 to 1000 µm, and even more preferably 5 to 500 µm.

In the instance where the niobate particles include K₂Nb₄O₁₁ particles having a columnar shape, a wire shape, or a ribbon shape, the short length of the particles is preferably 0.05 to 100 µm, more preferably 0.1 to 50 µm, and even more preferably 0.2 to 25 µm.

In the K₂Nb₄O₁₁ particles having a columnar shape, a wire shape, or a ribbon shape, the aspect ratio is preferably 2 or greater, preferably 2 to 100, more preferably 5 to 100, and even more preferably 7 to 50, where the aspect ratio is a ratio of the long length to the short length.

In the present specification, the "long length" of the niobate particles is a length of a long side of a bounding rectangle that surrounds a particle image of a primary particle of the niobate particles (the bounding rectangle is defined such that the rectangle has a minimum area), and the particle image is an image in a two-dimensional image acquired with a scanning electron microscope (SEM). In the present specification, the "short length" of the niobate particles is a length represented by a straight line that connects two farthest points on the outer periphery of the particle image, in a direction perpendicular to the long length.

Note that in the instance where the niobate particles have a columnar shape, a wire shape, or a ribbon shape, if the niobate particles are compared to a fiber, the long length generally corresponds to a length of the fiber, and the short length generally corresponds to a diameter of the fiber, and, in some cases, depending on the arrangement of particles captured in an image, a deviation between the values of the actual long length and short length of the particles and the values of the measurements obtained from the two-dimensional image may be large. Accordingly, in instances where, among the particle shapes of a sample, a representative shape is recognized to be a columnar shape, a wire shape, or a ribbon shape, niobate particles that exhibit a face parallel to a longitudinal direction thereof in the captured image are to be appropriately selected and used as particles of interest for the measurement.

The values of the long length and the short length are averages of the values obtained from 50 or more niobate particles randomly selected from particles having a euhedral shape, which are particles of interest for the measurement.

In the instance where niobate particles having a columnar shape, a wire shape, or a ribbon shape are present, it is preferable that 50% or more particles have a columnar shape, a wire shape, or a ribbon shape, it is more preferable that 80% or more particles have a columnar shape, a wire shape, or a ribbon shape, and it is even more preferable that 90% or more particles have a columnar shape, a wire shape, or a ribbon shape, where the percentages are weight-based or number-based percentages.

As the firing temperature increases while the amount of use of molybdenum based on the amount of use of niobium is not excessively increased, it is more likely that K₂Nb₄O₁₁ particles having high values of the long length and the short length can be obtained.

In the instance where the niobate particles include K₄Nb₆O₁₇ particles having a plate shape, the particle size of the particles is preferably 1 to 1000 µm, more preferably 5 to 500 µm, and even more preferably 10 to 250 µm.

In the present specification, the "particle size" of the K₄Nb₆O₁₇ particles having a plate shape is a length of a maximum point-to-point distance, with the points being points on an exterior contour of a primary particle in a particle image of the niobate particles, and the particle image is an image in a two-dimensional image acquired with a scanning electron microscope (SEM).

The value of the particle size is an average of the values obtained from 50 or more niobate particles randomly selected from particles having a euhedral shape, which are particles of interest for the measurement.

In the instance where niobate particles having a plate shape are present, it is preferable that 50% or more particles have a plate shape, it is more preferable that 80% or more particles have a plate shape, and it is even more preferable that 90% or more particles have a plate shape, where the percentages are weight-based or number-based percentages.

As an amount of use of molybdenum, based on the amount of use of niobium, increases, and a firing temperature increases, it is more likely that K₄Nb₆O₁₇ particles having a high value of the particle size can be obtained.

In the instance where the niobate particles include KNb₃O₈ particles having a columnar shape, a wire shape, or a ribbon shape, the niobate particles may be, for example, those in which the KNb₃O₈ particles have a long length of 10 to 10000 µm, a short length of 5 to 100 µm, and an aspect ratio of 2 to 100, where the aspect ratio is a ratio of the long length to the short length.

In the instance where the niobate particles include KNb₃O₈ particles having a columnar shape, a wire shape, or a ribbon shape, the long length of the particles is preferably 10 to 10000 µm, more preferably 50 to 5000 µm, and even more preferably 100 to 1000 µm.

In the instance where the niobate particles include KNb₃O₈ particles having a columnar shape, a wire shape, or a ribbon shape, the short length of the particles is preferably 5 to 100 µm, more preferably 10 to 75 µm, and even more preferably 15 to 50 µm.

In the KNb₃O₈ particles having a columnar shape, a wire shape, or a ribbon shape, the aspect ratio is preferably 2 or greater, preferably 2 to 100, more preferably 5 to 50, and even more preferably 7 to 30, where the aspect ratio is a ratio of the long length to the short length.

In the niobate particles of this embodiment, a content of the molybdenum, in terms of a content percentage calculated as MoO₃, may be 0.01 mass% or greater, 0.01 to 20 mass%, 0.05 to 15 mass%, or 0.1 to 10 mass%, as determined by an XRF analysis of the niobate particles, the content percentage being based on a total mass of the niobate particles taken as 100 mass%.

The "content percentage calculated as MoO₃" is a value determined from an amount of MoO₃. The amount of MoO₃ is calculated from a content of molybdenum determined by an XRF analysis, with the calculation being performed using a MoO₃ calculation standard curve.

In the niobate particles of this embodiment, a content of niobium, in terms of a content percentage calculated as Nb₂O₅, may be 50 mass% or greater, 50 to 99 mass%, 60 to 98 mass%, or 70 to 95 mass%, as determined by an XRF analysis of the niobate particles, the total content percentage being based on the total mass of the niobate particles taken as 100 mass%.

The "content percentage calculated as Nb₂O₅" is a value determined from an amount of Nb₂O₅. The amount of Nb₂O₅ is calculated from a content of niobium determined by an XRF analysis, with the calculation being performed using a Nb₂O₅ calculation standard curve.

In the niobate particles, a content of potassium and/or sodium, in terms of a total content percentage calculated as K₂O and Na₂O, may be 0.5 mass% or greater, 0.5 to 40 mass%, 1 to 30 mass%, or 3 to 20 mass%, as determined by an XRF analysis of the niobate particles, the total content percentage being based on the total mass of the niobate particles taken as 100 mass%.

The "total content percentage calculated as K₂O and Na₂O" is a value determined from the sum of an amount of K₂O and an amount of Na₂O. The amount of K₂O is calculated from a content of potassium determined by an XRF analysis, with the calculation being performed using a K₂O calculation standard curve. The amount of Na₂O is calculated from a content of sodium determined by an XRF analysis, with the calculation being performed using a Na₂O calculation standard curve. Note that when the niobate particles have a composition of KₓNa₍₁₋ₓ₎NbO₃ in which x = 0 or 1, the content of potassium or the content of sodium may be 0.

Regarding the content of molybdenum, the content of niobium, and the content of potassium and sodium, the values of the contents may be selected in a desired combination.

As an example, the niobate particles of this embodiment may be niobate particles in which the content percentage of molybdenum calculated as MoO₃ is 0.01 to 20 mass%, the content percentage of niobium calculated as Nb₂O₅ is 50 to 99 mass%, and the total content percentage of potassium and/or sodium calculated as K₂O and/or Na₂O is 0.5 to 40 mass%, as determined by an XRF analysis of the niobate particles, the content percentages being based on the total mass of the niobate particles taken as 100 mass%.

As another example, the niobate particles of this embodiment may be niobate particles in which the content percentage of molybdenum calculated as MoO₃ is 0.05 to 15 mass%, the content percentage of niobium calculated as Nb₂O₅ is 60 to 98 mass%, and the total content percentage of potassium and/or sodium calculated as K₂O and/or Na₂O is 1 to 30 mass%, as determined by an XRF analysis of the niobate particles, the content percentages being based on the total mass of the niobate particles taken as 100 mass%.

As another example, the niobate particles of this embodiment may be niobate particles in which the content percentage of molybdenum calculated as MoO₃ is 0.1 to 10 mass%, the content percentage of niobium calculated as Nb₂O₅ is 70 to 95 mass%, and the total content percentage of potassium and/or sodium calculated as K₂O and/or Na₂O is 3 to 20 mass%, as determined by an XRF analysis of the niobate particles, the content percentages being based on the total mass of the niobate particles taken as 100 mass%.

The niobate particles of this embodiment may be provided as aggregates of niobate particles. The values of the content of molybdenum, the content of niobium, the content of potassium, and the content of sodium, mentioned above, may be values determined by using the aggregates as a sample.

In the niobate particles of this embodiment, the niobate represented by KₓNa₍₁₋ₓ₎Nb_{y}O_{z} may be present in an amount of 50 mass% or greater, 60 to 99.5 mass%, 65 to 99 mass%, or 70 to 95 mass%, based on the total mass of the niobate particles taken as 100 mass%.

The niobate particles of this embodiment can be produced, for example, according to <<Method for Producing Niobate Particles>>, described below.

Note that the niobate particles of the present invention are not limited to those produced by the method of the embodiment below for producing niobate particles.

The niobate particles of this embodiment can have properties of both niobate and molybdenum and, therefore, are very useful.

The niobate particles of this embodiment can be used in piezoelectric materials, catalysts, water purification materials, and the like.

### <<Method for Producing Niobate Particles>>

According to an embodiment, the method for producing niobate particles is a method for producing the above-described niobate particles and includes firing a niobium compound in the presence of a molybdenum compound and of a potassium compound and/or a sodium compound.

The method of this embodiment for producing niobate particles enables the production of the molybdenum-containing niobate particles of the above embodiment of the present invention.

Furthermore, in the method of this embodiment for producing niobate particles, since the niobium compound is fired in the presence of a molybdenum compound and of a potassium compound and/or a sodium compound, the crystal shape of the niobate particles that are produced can be easily controlled.

Preferably, the method for producing niobate particles includes a step (mixing step) in which a niobium compound is mixed with a molybdenum compound and with a potassium compound and/or a sodium compound to form a mixture and includes a step (firing step) in which the mixture is fired.

The molybdenum compound and the potassium compound may be at least partially replaced with a compound containing molybdenum and potassium, such as potassium molybdate. Likewise, the molybdenum compound and the sodium compound may be at least partially replaced with a compound containing molybdenum and sodium, such as sodium molybdate.

Accordingly, a step of mixing a niobium compound with a compound containing molybdenum and containing potassium and/or sodium to form a mixture is also regarded as the step of mixing a niobium compound with a molybdenum compound and with a potassium compound and/or a sodium compound to form a mixture.

In the instance where the niobate particles that are produced contain potassium niobate, the method of this embodiment for producing niobate particles may include a step (mixing step) in which a niobium compound is mixed with a molybdenum compound and a potassium compound to form a mixture prior to the firing step and include a step (firing step) in which the mixture is fired.

In the instance where the niobate particles that are produced contain potassium niobate, the method of this embodiment for producing niobate particles may include a step (mixing step) in which a niobium compound is mixed with a molybdenum compound and a sodium compound to form a mixture prior to the firing step and include a step (firing step) in which the mixture is fired.

### [Mixing Step]

The mixing step is a step in which a niobium compound is mixed with a molybdenum compound and with a potassium compound and/or a sodium compound to form a mixture. The ingredients in the mixture will be described below.

### (Niobium Compound)

The niobium compound may be any compound that can form niobate when the compound is fired with a raw material compound, and examples of the niobium compound include niobium oxide, niobium hydroxide, niobium sulfide, niobium nitride, niobium halides, such as niobium fluoride, niobium chloride, niobium bromide, and niobium iodide, and niobium alkoxides; niobium hydroxide and niobium oxide are preferable, and niobium oxide is more preferable.

Examples of niobium oxide include niobium pentoxide (Nb₂O₅), niobium dioxide (NbO₂), and niobium monoxide (NbO). Any other niobium oxide with a different valence may be used in addition to or in place of the niobium oxides with the mentioned oxidation numbers.

The physical properties of the niobium compounds that serve as precursors are not particularly limited, and examples of the physical properties include the shape, the particle size, and the specific surface area.

The shape resulting from the firing is a shape that substantially does not reflect the shape of the niobium compound used as a raw material. Accordingly, a niobium compound having any of a variety of shapes may be suitably used. Examples of the shapes include spherical shapes, amorphous shapes, shapes of a structure having an aspect (e.g., a wire, a fiber, a ribbon, or a tube), and sheet shapes.

### (Molybdenum Compound)

Examples of the molybdenum compound include molybdenum oxide, molybdic acids, molybdenum sulfide, and molybdate compounds; molybdenum oxide or a molybdate compound is preferable.

Examples of the molybdenum oxide include molybdenum dioxide (MoO₂) and molybdenum trioxide (MoO₃), and molybdenum trioxide is preferable.

The molybdate compound is preferably an alkali metal salt of a molybdenum oxoanion, more preferably lithium molybdate, potassium molybdate, or sodium molybdate, and even more preferably potassium molybdate or sodium molybdate.

In the method of this embodiment for producing niobate particles, the molybdenum compound may be a hydrate.

The molybdenum compound is preferably at least one compound selected from the group consisting of molybdenum trioxide, lithium molybdate, potassium molybdate, and sodium molybdate and more preferably at least one compound selected from the group consisting of molybdenum trioxide, potassium molybdate, and sodium molybdate.

Compounds containing molybdenum and potassium, which are suitable as a fluxing agent, can be produced, for example, in the process of firing by using, as raw materials, a molybdenum compound and a potassium compound, which are less expensive and more readily available. In this specification, the instance in which a molybdenum compound and a potassium compound are used as fluxing agents and the instance in which a compound containing molybdenum and potassium is used as a fluxing agent are both regarded as the instance in which a molybdenum compound and a potassium compound are used as fluxing agents, that is, the instance referred to as the "presence of a molybdenum compound and a potassium compound".

Compounds containing molybdenum and sodium, which are suitable as a fluxing agent, can be produced, for example, in the process of firing by using, as raw materials, a molybdenum compound and a sodium compound, which are less expensive and more readily available. In this specification, the instance in which a molybdenum compound and a sodium compound are used as fluxing agents and the instance in which a compound containing molybdenum and sodium is used as a fluxing agent are both regarded as the instance in which a molybdenum compound and a sodium compound are used as fluxing agents, that is, the instance referred to as the "presence of a molybdenum compound and a sodium compound".

The molybdenum compounds mentioned above may be used alone or in a combination of two or more.

The potassium molybdate (K₂MoₙO₃ₙ₊₁, n=1 to 3) can also have functions of a potassium compound, which will be described below, because the potassium molybdate contains potassium.

The sodium molybdate (Na₂MoₙO₃ₙ₊₁, n=1 to 3) can also have functions of a sodium compound, which will be described below, because the sodium molybdate contains sodium.

### (Potassium Compound)

Examples of the potassium compound include, but are not limited to, potassium chloride, potassium chlorite, potassium chlorate, potassium sulfate, potassium hydrogen sulfate, potassium sulfite, potassium bisulfite, potassium nitrate, potassium carbonate, potassium hydrogen carbonate, potassium acetate, potassium oxide, potassium bromide, potassium bromate, potassium hydroxide, potassium silicate, potassium phosphate, potassium hydrogen phosphate, potassium sulfide, potassium hydrogen sulfide, potassium molybdate, and potassium tungstate. These potassium compounds include isomers, as in the instance of the molybdenum compounds. Among these, potassium carbonate, potassium hydrogen carbonate, potassium oxide, potassium hydroxide, potassium chloride, potassium sulfate, and potassium molybdate are preferable; potassium carbonate, potassium hydrogen carbonate, potassium chloride, potassium sulfate, and potassium molybdate are more preferable.

The potassium compounds mentioned above may be used alone or in a combination of two or more.

As with the instance described above, the potassium molybdate can also have functions of a molybdenum compound because the potassium molybdate contains molybdenum.

### (Sodium Compound)

Examples of the sodium compound include, but are not limited to, sodium carbonate, sodium molybdate, sodium oxide, sodium sulfate, sodium hydroxide, sodium nitrate, sodium chloride, and metallic sodium. Among these, sodium carbonate, sodium molybdate, sodium oxide, and sodium sulfate are preferable in terms of industrial availability and ease of handling.

The sodium compounds mentioned above may be used alone or in a combination of two or more.

As with the instance described above, the sodium molybdate can also have functions of a molybdenum compound because the sodium molybdate contains molybdenum.

Thus, some of the compounds are redundantly referred to as a molybdenum compound under a different classification. It is preferable that the molybdenum compound be at least one compound selected from the group consisting of molybdenum trioxide, potassium molybdate, and sodium molybdate, that the sodium compound be sodium carbonate or sodium molybdate, and that the potassium compound be potassium carbonate or potassium molybdate.

A preferred example is a method for producing sodium niobate particles including firing a niobium compound in the presence of a molybdenum compound and a sodium compound.

A preferred example is a method for producing potassium niobate particles including firing a niobium compound in the presence of a molybdenum compound and a potassium compound.

A preferred example is a method for producing sodium potassium niobate particles including firing a niobium compound in the presence of a molybdenum compound, a sodium compound, and a potassium compound.

A preferred example is a method for producing potassium niobate particles including firing a niobium compound in the presence of a compound containing molybdenum and potassium.

A preferred example is a method for producing sodium niobate particles including firing a niobium compound in the presence of a compound containing molybdenum and sodium.

A preferred example is a method for producing sodium potassium niobate particles including firing a niobium compound in the presence of a compound containing molybdenum, potassium, and sodium.

In the method of this embodiment for producing niobate particles, the molybdenum compound is used as a fluxing agent. In the present specification, the production method, which uses a molybdenum compound as a fluxing agent, may hereinafter simply be referred to as a "flux method". Presumably, the firing causes a reaction of the molybdenum compound and of a sodium compound or a potassium compound with a niobium compound at a high temperature (this is also true for the instances in which a niobium compound and a compound containing molybdenum and sodium are used, or a niobium compound and a compound containing molybdenum and potassium are used), thereby forming niobate particles (KₓNa₍₁₋ₓ₎Nb_{y}O_{z}) while forming a molybdate compound (e.g., KₐMo_{b}O_{c}, NaₐMo_{b}O_{c}, or KₐNa_{a'}Mo_{b}O_{c}) that serves as flux. Presumably, a portion of the molybdenum compound is incorporated into the niobate particles during the formation (crystal growth) of the niobate particles. Regarding more details of the mechanism by which the molybdenum compound that is included into the niobate particles is produced, the molybdenum compound, such as a molybdenum oxide, is presumably formed in the process of the crystal growth of the niobate particles during firing via the formation and decomposition of Mo-O-Nb in the system or via a molybdate compound that serves as a fluxing agent. Furthermore, in view of the mechanism, it can also be presumed that molybdenum oxide exists on a surface of the niobate particles via the bonds in Mo-O-Nb. The presence of a molybdenum compound (e.g., molybdenum oxide) in the niobate particles leads to improvement in the physical properties of the niobate particles, for example, improvement in catalytic properties of the niobate particles.

The molybdate compound serving as flux does not vaporize even in a firing temperature range and, after being fired, can be easily collected by washing. Accordingly, the amount of the molybdenum compound that is released to the outside of the firing furnace is reduced, and the cost of production can be significantly reduced.

In the method of this embodiment for producing niobate particles, a total amount of use of the raw materials that are believed to serve as fluxing agents, namely, the molybdenum compound, the potassium compound, and the sodium compound (hereinafter also referred to as "fluxing agents") and an amount of use of the niobium compound are not particularly limited. Preferably, 10 parts by mass or greater of the fluxing agents may be mixed with 100 parts by mass of the niobium compound that is a raw material, to form a mixture, and the mixture may be fired. More preferably, 20 to 5000 parts by mass of the fluxing agents may be mixed with 100 parts by mass of the niobium compound to form a mixture, and the mixture may be fired. Even more preferably, 30 to 1000 parts by mass of the fluxing agents may be mixed with 100 parts by mass of the niobium compound to form a mixture, and the mixture may be fired.

From the standpoint of efficient crystal growth, it is preferable that the amount of use of the fluxing agents, based on the amount of use of the niobium compound that is a raw material, be greater than or equal to the lower limit mentioned above. In the instance where the amount of use of the fluxing agents, based on the amount of use of the niobium compound that is a raw material, is increased, it is likely that the size of the niobate particles that are produced can be easily controlled; however, from the standpoint of reducing the fluxing agents that are used and improving production efficiency, it is preferable that the amount be less than or equal to the upper limit mentioned above.

In the method of this embodiment for producing niobate particles, it is preferable a molar ratio of molybdenum atoms to niobium atoms in the mixture, which is a molar ratio denoted as molybdenum/niobium, be greater than or equal to 0.01. The molar ratio is more preferably greater than or equal to 0.03, even more preferably greater than or equal to 0.05, and particularly preferably greater than or equal to 0.1.

An upper limit of the molar ratio of molybdenum atoms to niobium atoms in the mixture may be appropriately specified. For example, from the standpoint of reducing the molybdenum compound that is used and improving production efficiency, the molybdenum/niobium may be specified to be less than or equal to 5, less than or equal to 3, less than or equal to 2, or less than or equal to 1.5.

An example of a range of the value of the molar ratio of molybdenum atoms to niobium atoms in the mixture, denoted as molybdenum/niobium, may be preferably 0.01 to 5, more preferably 0.03 to 3, even more preferably 0.05 to 2, and particularly preferably 0.1 to 1.5.

When the molar ratio of molybdenum atoms to niobium atoms is within any of the above-mentioned ranges, niobate particles having a distinct euhedral shape, such as a cubic shape, a plate shape, a columnar shape, a wire shape, or a ribbon shape, can be readily obtained, and, therefore, such ranges are preferable.

In the method of this embodiment for producing niobate particles, a molar ratio of potassium atoms and/or sodium atoms to molybdenum atoms in the mixture, which is a molar ratio denoted as (K+Na)/Mo, is preferably 1 to 4 and more preferably 2 to 4. In particular, when the (K+Na)/Mo is 2 to 4, a single composition of KₓNa₍₁₋ₓ₎Nb_{y}O_{z} can be readily formed in the niobate particles that are produced.

In the method of this embodiment for producing niobate particles, a ratio of K/Na in the niobate particles that are produced can be varied in accordance with a compounding ratio of K/Na in the raw materials. The molar ratio of potassium atoms and/or sodium atoms to molybdenum atoms in the mixture may be appropriately selected in accordance with desired values of X and 1-X, which are values in the KₓNa₍₁₋ₓ₎Nb_{y}O_{z}, for the niobate particles that are produced. When 0 < X < 1, a molar ratio of potassium atoms to sodium atoms in the mixture, which is a molar ratio denoted as K/Na, may be, for example, 0.01 to 10 or 0.1 to 5.

In the instance where the compounds are used within any of the above-mentioned ranges, the amount of the molybdenum compound that is to be present in the resulting niobate particles becomes more appropriate, and niobate particles having a controlled crystal shape can be readily obtained.

### [Firing Step]

The firing step is a step of firing the mixture. The niobate particles of the above embodiment can be obtained by firing the mixture. As described above, this production method is referred to as a "flux method".

The flux method is classified as a solution method. More specifically, the flux method is a method for growing crystals that utilizes an instance in which a crystal-flux binary phase diagram is of a eutectic type. The mechanism of the flux method is speculated to be as follows. Specifically, as a mixture of a solute and flux is heated, the solute and the flux form a liquid phase. In this process, since the flux is a fusing agent, that is, the solute-flux binary phase diagram is of a eutectic type, the solute melts at a temperature lower than its melting point to form a liquid phase. When the flux is evaporated in this state, the concentration of the flux decreases, that is, the effect of the flux of decreasing the melting point of the solute is reduced, and thus, the evaporation of the flux serves as a driving force to cause the crystal growth of the solute (flux evaporation method). Note that the crystal growth of the solute can also be caused by cooling the liquid phase of the solute and the flux (slow cooling method) .

With the flux method, the crystal growth can be achieved at a temperature much lower than a melting point, the crystal structure can be precisely controlled, and a crystal body having a euhedral shape can be formed. These are examples of advantages of the flux method.

The mechanism by which the niobate particles are produced in a flux method that uses a molybdenum compound as flux is not necessarily clear. Probably, the mechanism is, for example, as follows. Specifically, when a niobium compound is fired in the presence of a molybdenum compound, a portion of the niobium compound forms niobium molybdate, and the molybdenum compound forms one or more molybdates (e.g., KₐMo_{b}O_{c}, NaₐMo_{b}O_{c}, and KₐNa_{a'}Mo_{b}O_{c}). In this process, the function of the molybdate as flux enables the crystal of the niobate to grow at a temperature lower than the melting point of the niobate, as will be appreciated from the description above. Furthermore, for example, the niobium molybdate fraction that has been formed is decomposed, which promotes the crystal growth of the niobate particles. That is, while the molybdenum compound (molybdate) serves as flux, the niobate particles are produced via the niobium molybdate, which is an intermediate product.

The firing may be performed by any method, which may be a method known in the art. Presumably, when the firing temperature exceeds 500°C, a portion of the niobium compound reacts with the molybdenum compound to form niobium molybdate, and the molybdenum compound forms one or more molybdates (KₐMo_{b}O_{c}, NaₐMo_{b}O_{c}, and KₐNa_{a'}Mo_{b}O_{c}). Furthermore, presumably, when the firing temperature reaches 800°C or greater, the niobium molybdate fraction that has been formed is decomposed, and the molybdate serves as flux to form the niobate particles. Furthermore, presumably, regarding the niobate particles, a molybdenum compound is incorporated into the niobate particles during the processes of the decomposition of the niobium molybdate and the crystal growth of the particles.

Furthermore, the states of the niobium compound, the molybdenum compound, the sodium compound, the potassium compound, and the like that can be used in the firing are not particularly limited, and it is sufficient that the raw material compounds, namely, the molybdenum compound, the niobium compound, the sodium compound, the potassium compound, and the like be present in the same space in which the raw material compounds can act on one another. Specifically, any of the following forms of mixing may be employed: simple mixing in which powders of the raw material compounds are mixed together, mechanical mixing that uses a mill or the like, and mixing that uses a mortar or the like; and the mixing may be performed in a dry state or a wet state.

The conditions of the firing temperature are not particularly limited and are appropriately selected in consideration of the target particle size of the niobate particles, the formation of a molybdenum compound in the niobate particles, the shape of the niobate particles, and the like. The firing temperature may be 700°C or greater, which is close to the temperature at which molybdate can serve as flux. The firing temperature may be 750°C or greater, 800°C or greater, 850°C or greater, or 900°C or greater.

From the standpoint of efficiently producing niobate particles having a distinct euhedral shape, such as a cubic shape, a plate shape, a columnar shape, a wire shape, or a ribbon shape, it is preferable that the firing temperature be 800°C or greater. The firing temperature is more preferably 900°C or greater.

According to the results obtained in Examples, which will be described later, when the firing temperature is 1100°C or greater, K₄Nb₆O₁₇ particles or KNb₃O₈ particles can be readily obtained.

In general, controlling the shape of the niobate that results from firing requires the implementation of high-temperature firing at greater than 1500°C, which is close to the melting point of niobium oxide. Industrial application of such high-temperature firing involves significant problems in terms of the load on the firing furnace and the fuel cost.

With an embodiment of the present invention, the formation of niobate particles can be achieved efficiently and at low cost even under conditions in which, for example, a maximum firing temperature for firing the niobium compound is less than or equal to 1500°C.

Furthermore, with the method of this embodiment for producing niobate particles, it is possible to form niobate particles having a euhedral shape regardless of the shape of the precursors, even at a firing temperature of 1300°C or less, which is a temperature much lower than the melting point of niobium oxide. Furthermore, from the standpoint of efficiently producing the niobate particles, it is preferable that the firing temperature be 1200°C or less. More preferably, the firing temperature is 1100°C or less.

A range of the value of the firing temperature for firing the niobium compound in the firing step may be, for example, 700 to 1500°C, 750 to 1400°C, 800 to 1300°C, 850 to 1200°C, or 900 to 1100°C.

A heating rate may be specified to be 20 to 600°C/h, 40 to 500°C/h, or 80 to 400°C/h, from the standpoint of production efficiency.

Regarding the time of firing, it is preferable that the heating time for increasing the temperature to a predetermined firing temperature be within a range of 15 minutes to 10 hours, and a holding time for holding at the firing temperature be within a range of 5 minutes to 30 hours. In terms of achieving efficient formation of the niobate particles, it is preferable that the holding time associated with the firing temperature be 2 hours or more, and it is more preferable that the holding time associated with the firing temperature be 2 to 15 hours.

By selecting the conditions of a firing temperature of 700 to 1500°C and a holding time associated with the firing temperature of 2 to 15 hours, niobate particles containing molybdenum and having a euhedral shape can be readily obtained.

By selecting the conditions of a firing temperature of 900 to 1500°C and a holding time associated with the firing temperature of 2 to 15 hours, niobate particles containing molybdenum and having a distinct euhedral shape, such as a cubic shape, a plate shape, a columnar shape, a wire shape, or a ribbon shape, can be readily obtained.

Atmospheres for the firing are not particularly limited as long as the effects of the present invention can be produced. For example, an oxygen-containing atmosphere, such as air or oxygen, or an inert atmosphere, such as nitrogen, argon, or carbon dioxide, is preferable, and, if cost is taken into consideration, an air atmosphere is more preferable.

Apparatuses for performing the firing are also not necessarily limited, and a so-called firing furnace may be used. Preferably, the firing furnace is formed of a material that does not react with sublimed molybdenum oxide, and further preferably, the firing furnace is highly gas-tight so that the molybdenum oxide can be efficiently used.

### [Cooling Step]

The method for producing niobate particles may include a cooling step. The cooling step is a step of cooling the niobate particles that have undergone crystal growth in the firing step.

A cooling rate is not particularly limited and is preferably 1 to 1000°C/hour, more preferably 5 to 500°C/hour, and even more preferably 50 to 100°C/hour. When the cooling rate is 1°C/hour or greater, a production time can be shortened, and, accordingly, such a cooling rate is preferable. When the cooling rate is 1000°C/hour or less, cracking of a firing crucible due to heat shock does not occur frequently, that is, the firing crucible can be used for a long time, and, accordingly, such a cooling rate is preferable.

The cooling may be performed by any method, which may be natural cooling or may involve the use of a cooling device.

### [Aftertreatment Step]

The production method of this embodiment may include an aftertreatment step. The aftertreatment step may be a step of separating the niobate particles from the fluxing agent, both being in the fired product, and the separating may be performed after the fired product is removed from the firing crucible. The aftertreatment step may be performed after the firing step described above. The aftertreatment step may be repeatedly performed, twice or more, as necessary.

Examples of methods for removing the fluxing agent include washing and high-temperature treatment. These may be used in combination.

Examples of methods for the washing include, but are not limited to, water washing provided that the flux is water-soluble, as is the above-described molybdate compound.

Examples of methods for the high-temperature treatment include a method in which the temperature is increased to a temperature greater than or equal to the sublimation point or the boiling point of the flux.

### [Grinding Step]

In some cases, the fired product resulting from the firing step may include aggregates of niobate particles, and, consequently, a particle size range suitable for applications that are being considered may not be satisfied. Accordingly, if necessary, the niobate particles may be ground so that a suitable particle size range can be satisfied.

The grinding of the fired product may be performed by any method, which may be a method known in the art that uses a ball mill, a jaw crusher, a jet mill, a disc mill, a SpectroMill, a grinder, a mixer mill, or the like.

### [Size Classification Step]

The fired product including niobate particles that has been produced by the firing step may be subjected to a size classification process when appropriate, so that the particle size range can be adjusted. The term "size classification process" refers to an operation of sorting particles by particle size.

The size classification may be wet classification or dry classification, but, from the standpoint of productivity, dry classification is preferable. The dry classification may be classification using a sieve or may be, for example, air classification, in which classification is performed by using a difference between the centrifugal force and the fluid drag. From the standpoint of classification accuracy, air classification is preferable, and the air classification may be performed by using a classifier, such as an air sifter that utilizes a Coanda effect, a swirling airflow type classifier, a forced vortex centrifugal classifier, or a semi-free vortex centrifugal classifier.

The grinding step and the size classification step described above may be performed at stages where the steps are necessary. By selecting whether or not to perform the grinding and/or the size classification and/or selecting conditions for the steps, it is possible, for example, to adjust the average particle size of the resulting niobate particles.

The niobate particles of the above embodiment or the niobate particles produced by the production method of this embodiment may have few aggregates or no aggregates. This is preferable because in such a case, their inherent properties can be easily exhibited, handleability thereof is enhanced, and, in an instance where the niobate particles are used by being dispersed in a dispersion medium, enhanced dispersibility is exhibited.

Note that with the method of this embodiment for producing niobate particles, niobate particles having few aggregates or no aggregates can be readily produced; therefore, the method has an excellent advantage of producing, with high productivity, niobate particles having desired excellent properties, without having to perform the grinding step or the size classification step.

### EXAMPLES

The present invention will now be described in more detail with reference to Examples. Note that the present invention is not limited to the Examples described below.

### <Analysis and Evaluation>

The following measurements were performed by using powders of Examples and Reference Examples as samples.

### [Measurement of Particle Size]

### (In the instance of particles having a cubic shape)

Images of each of the sample powders were acquired with a scanning electron microscope (SEM). Regarding the smallest unit particle (i.e., primary particle) that was identifiable in the two-dimensional images, in the instance where the particle was recognized as having a cubic shape, the length of a side of the hexahedron as determined from the particle image of the primary particle was measured as the particle size.

The same operation was performed on 50 primary particles, and an average of the measurements was determined.

### (In the instance of particles having a columnar shape, a wire shape, or a ribbon shape)

Images of each of the sample powders were acquired with a scanning electron microscope (SEM). Regarding the smallest unit particle (i.e., primary particle) that was identifiable in the two-dimensional images, in the instance where the particle was recognized as having a columnar shape, a wire shape, or a ribbon shape, the long length and the short length thereof were measured. The long length was a length of a long side of a bounding rectangle that surrounded the particle image (the bounding rectangle was defined such that the rectangle has a minimum area). The short length was a length represented by a straight line that connected two farthest points on the outer periphery of the particle image, in a direction perpendicular to the long length.

In instances where, among the particle shapes of a sample, a representative shape was recognized to be a columnar shape, a wire shape, or a ribbon shape, niobate particles that exhibited a face parallel to a longitudinal direction thereof in the captured image were appropriately selected and used as particles of interest for the measurement.

The same operation was performed on 50 primary particles, and an average of the measurements was determined.

Furthermore, the aspect ratio of the primary particles was determined as a ratio of the long length to the short length (long length/short length).

### (In the instance of particles having a plate shape)

Images of each of the sample powders were acquired with a scanning electron microscope (SEM). Regarding the smallest unit particle (i.e., primary particle) that was identifiable in the two-dimensional images, in the instance where the particle was recognized as having a plate shape, the length of the maximum point-to-point distance, with the points being points on an exterior contour of the primary particle as determined from the particle image of the primary particle, was measured as the particle size.

The same operation was performed on 50 primary particles, and an average of the measurements was determined.

### [Analysis of Crystal Structure: XRD (X-ray diffraction) Method]

The sample powder was loaded into a measurement sample holder having a depth of 0.5 mm, which was then placed in a wide-angle X-ray diffractometer (XRD) (Ultima IV, manufactured by Rigaku Corporation), and a measurement was performed under the following conditions: Cu-Kα radiation, 40 kV/40 mA, a scanning speed of 2°/min, and a scanning range of 10 to 70°.

### [XRF (X-ray fluorescence) Analysis]

Approximately 70 mg of the sample powder was placed on filter paper and covered with a PP film and was then subjected to an XRF (X-ray fluorescence) analysis, which was performed with an X-ray fluorescence spectrometer PrimusIV (manufactured by Rigaku Corporation). The conditions for the analysis were as follows.

### Measurement conditions

EZ scan mode
Measured elements: F to U
Measurement time: standard
Measurement diameter: 10 mm
Residue component (balance component): none

XRF analysis was performed on the sample powder to determine a content of molybdenum of the sample powder, and then, the content percentage (mass%) calculated as MoO₃, based on the total mass of the sample powder taken as 100 mass%, was calculated.

XRF analysis was performed on the sample powder to determine a content of niobium of the sample powder, and then, the content percentage (mass%) calculated as Nb₂O₅, based on the total mass of the sample powder taken as 100 mass%, was calculated.

XRF analysis was performed on the sample powder to determine a content of potassium of the sample powder, and then, the content percentage (mass%) calculated as K₂O, based on the total mass of the sample powder taken as 100 mass%, was calculated.

XRF analysis was performed on the sample powder to determine a content of sodium of the sample powder, and then, the content percentage (mass%) calculated as Na₂O, based on the total mass of the sample powder taken as 100 mass%, was calculated.

### <1. Production of Niobate Particles Having Cubic Shape>

### [Example 1]

A mixture was prepared by mixing 10.0 g of niobium oxide (Nb₂O₅, a reagent manufactured by Kanto Chemical Co., Inc.), 6.8 g of molybdenum oxide (MoO₃, a reagent manufactured by Kanto Chemical Co., Inc.), and 10.0 g of sodium carbonate (Na₂CO₃, a reagent manufactured by Kanto Chemical Co., Inc.) together in a mortar. The resulting mixture was placed in a crucible and fired in a ceramic electric furnace at 900°C for 10 hours. After cooling, the crucible was removed from the ceramic electric furnace.

Subsequently, the resulting fired product was cleaned with water five times, and thereafter, the resultant was subjected to water washing, which used filtration to remove the waste wash water, and was then dried. Thus, the remaining fluxing agents were removed to afford 9.7 g of a powder of Example 1.

### [Example 2]

A powder of Example 2 was prepared by performing the same operation as in Example 1, except that 13.2 g of potassium carbonate (K₂CO₃, a reagent manufactured by Kanto Chemical Co., Inc.) was used instead of sodium carbonate, which was used in Example 1.

The synthesis conditions are shown in Table 1.

### [Examples 3 to 6]

Powders of Examples 3 to 6 were prepared by performing the same operation as in Example 1, except that the amounts of use of the raw material compounds were changed from those of Example 1, as shown in Table 1.

### [Reference Examples 1 and 2]

Powders of Reference Examples 1 and 2 were prepared by performing the same operation as in Example 1, except that the amounts of use of the raw material compounds were changed from those of Example 1, as shown in Table 1.

### <Results>

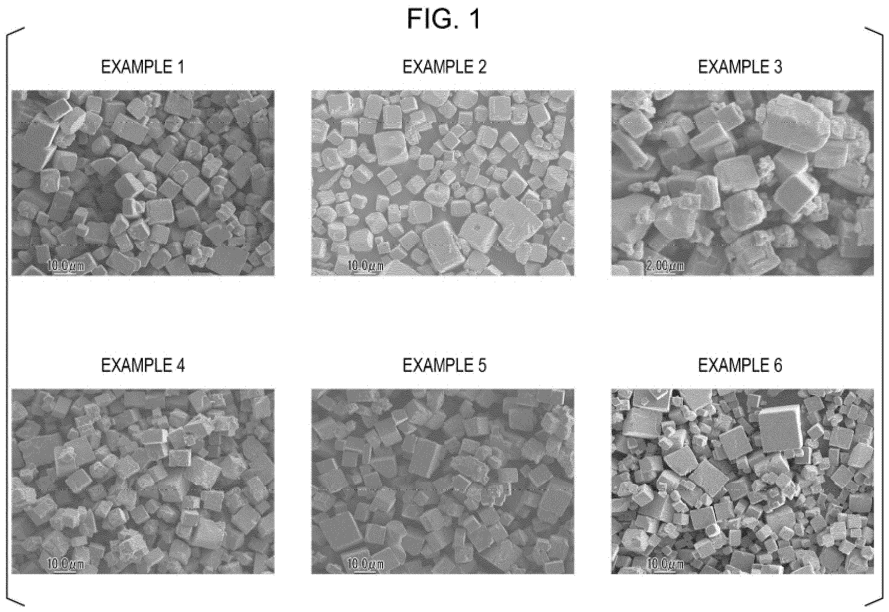

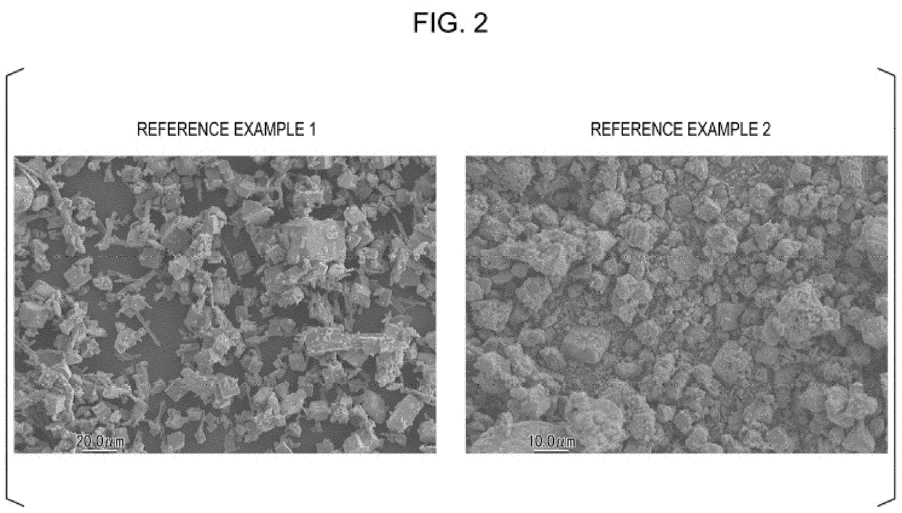

SEM images of the powders prepared in Examples 1 to 6 and Reference Examples 1 and 2 are shown in Figs. 1 and 2.

The results of the evaluations described above are shown in Table 1. The symbol "-" indicates that the compound was not used. "N.D." is an abbreviation of "not detected" and indicates that the compound was not detected.

**[Table 1]**

| | Production Conditions | | | | | | | | | | Evaluations | | | | | | |
|---|---|---|---|---|---|---|---|---|---|---|---|---|---|---|---|---|---|
| | Nb₂O₅ | MoO₃ | Na₂CO₃ | K₂CO₃ | Amount of Fluxing Agents to Amount of Nb₂O₅*1 | (K+Na) /Mo | K/Na | Mo/Nb | Firing Conditions | | SEM | | XRF | | | | XRD |
| | | | | | | | | | Temperature | Holding Time | Shape | Particle Size | KₓNa₍₁₋ₓ₎NbO₃ | | | MoO₃ | Composition |
| | | | | | | | | | | | | | Nb₂O₅ | K₂O | Na₂O | | |
| | 9 | 9 | 9 | 9 | parts by mass | molar Ratio | molar Ratio | molar Ratio | °C | h | | µm | mass% | mass% | mass% | mass% | |
| Example 1 | 10 | 6.8 | 10 | - | 168 | 2 | - | 0.6 | 900 | 10 | Cubic | 10 | 89.7 | N.D. | 9.97 | 0.292 | NaNbO₃ |
| Example 2 | 10 | 6.8 | - | 13.2 | 200 | 2 | - | 0.6 | 900 | 10 | Cubic | 10 | 88.4 | 8.07 | N.D. | 3.43 | KNbO₃ |
| Example 3 | 10 | 5.1 | 3.75 | 4.91 | 138 | 2 | 1 | 0.5 | 900 | 10 | Cubic | 5 | 85.2 | 5.53 | 8.45 | 0.75 | KₓNa₍₁₋ₓ₎NbO₃ |
| Example 4 | 10 | 6.8 | 5 | 6.53 | 183 | 2 | 1 | 0.6 | 900 | 10 | Cubic | 10 | 87.6 | 4.12 | 8.10 | 0.15 | KₓNa₍₁₋ₓ₎NbO₃ |
| Example 5 | 10 | 10.2 | 7.5 | 9.795 | 275 | 2 | 1 | 0.9 | 900 | 10 | Cubic | 15 | 89.3 | 3.37 | 7.13 | 0.178 | KₓNa₍₁₋ₓ₎NbO₃ |
| Example 6 | 10 | 6.8 | 7.5 | 4.03 | 183 | 2 | 0.4 | 0.6 | 900 | 10 | Cubic | 10 | 90.0 | 1.11 | 8.62 | 0.27 | KₓNa₍₁₋ₓ₎NbO₃ |
| Reference Example 1 | 10 | - | - | 13.2 | 132 | - | - | - | 900 | 10 | Amorphous | ≤ 20 | 76.4 | 23.4 | N.D. | N.D. | KNbO₃ |
| Reference Example 2 | 10 | - | 5 | 6.53 | 115 | - | 1 | - | 900 | 10 | Amorphous | ≤ 15 | 83.9 | 9.74 | 5.75 | N.D. | KₓNa₍₁₋ₓ₎NbO₃ |

| | | | | | | | | | | | | | | | | | |
|---|---|---|---|---|---|---|---|---|---|---|---|---|---|---|---|---|---|
| *1 Amount of fluxing agents per 100 parts by mass of Nb₂O₅ | | | | | | | | | | | | | | | | | |

Table 1 lists the shape and the size of the particles of the Examples and the Reference Examples as determined from the SEM images. In the instance where particles with different shapes were recognized to exist, a representative shape (most frequently observed shape) is listed. In the instance where no particular shape was observed, the particles were determined to be amorphous.

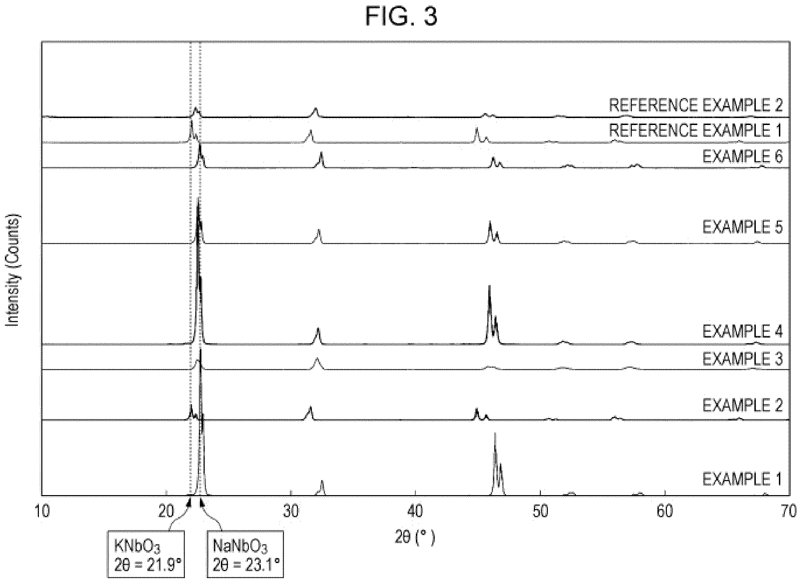

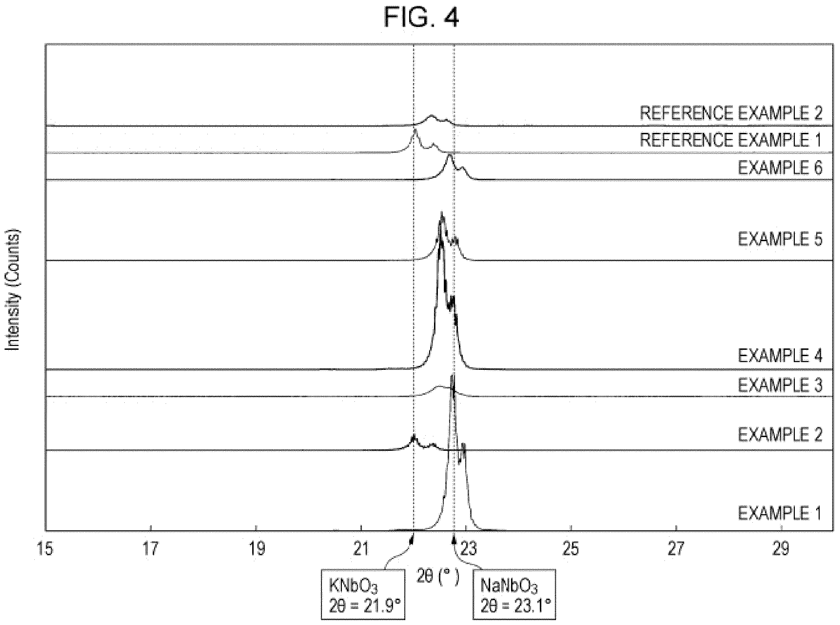

Figs. 3 and 4 show the results of the XRD analysis. In each of the samples of the Examples, a peak at approximately 2θ=21.9°, which corresponds to KnbO₃, and/or a peak at approximately 2θ=23.1°, which corresponds to NaNbO₃, were observed.

The results of the SEM observation and the XRD analysis confirmed that the powders obtained in the Examples included niobate particles containing KₓNa₍₁₋ₓ₎NbO₃, having a cubic shape, and having a perovskite crystal structure.

Furthermore, the results demonstrated that the niobate particles of Examples 1 to 6 contained niobium, potassium, sodium, and molybdenum in the amounts shown in Table 1, calculated as oxides, as determined by the XRF analysis.

The results of Examples 1 to 6 demonstrated that by firing a niobium compound in the presence of a molybdenum compound and of a potassium compound and/or a sodium compound, molybdenum-containing sodium potassium niobate particles can be produced by firing, even at a relatively low firing temperature of 900°C.

Furthermore, the results demonstrated that by firing a niobium compound in the presence of a molybdenum compound and of a potassium compound and/or a sodium compound, the shape of the sodium potassium niobate particles that are produced can be easily controlled.

### <2. Production of K₂Nb₄O₁₁ Particles>

### [Example 7]

A powder of Example 7 was prepared by performing the same operation as in Example 2, except that 5.0 g of potassium molybdate (K₂MoO₄, a reagent manufactured by Kanto Chemical Co., Inc.) was used instead of molybdenum oxide and potassium carbonate, which were used in Example 2.

### [Examples 8 to 14]

Powders of Examples 8 to 14 were prepared by performing the same operation as in Example 7, except that the amounts of use of the raw material compounds and the firing conditions were changed from those of Example 7, as shown in Table 2.

### [Examples 15 to 17]

Powders of Examples 15 to 17 were prepared by performing the same operation as in Example 2, except that the amounts of use of the raw material compounds and the firing conditions were changed from those of Example 2, as shown in Table 2.

### <Results>

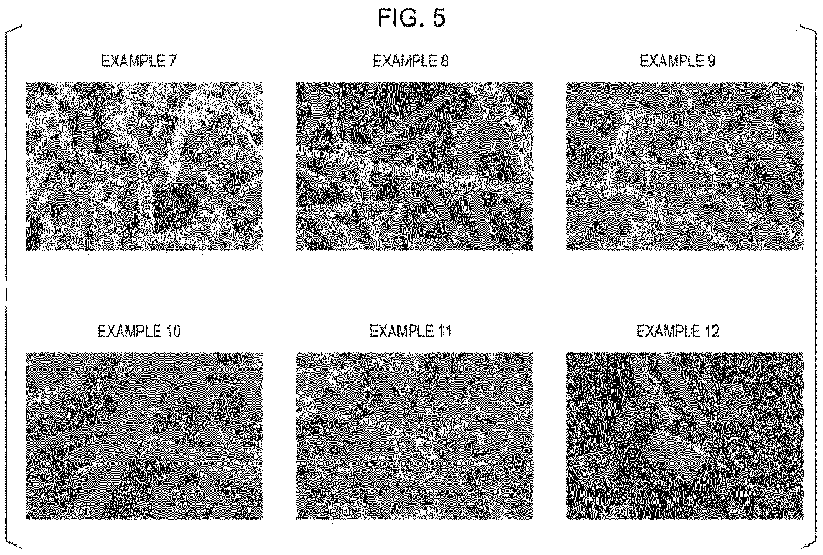

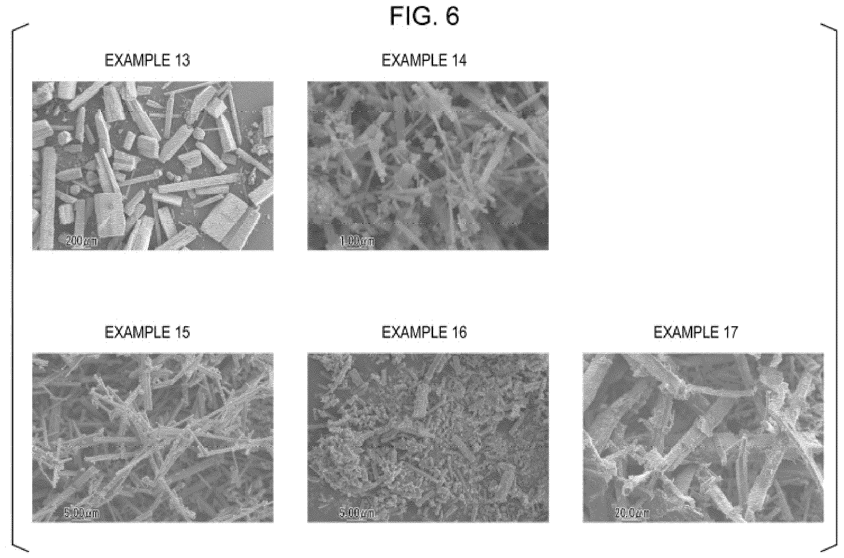

SEM images of the powders prepared in Examples 7 to 17 are shown in Figs. 5 and 6.

The results of the evaluations described above are shown in Table 2. The symbol "-" indicates that the compound was not used.

**[Table 2]**

| | Production Conditions | | | | | | | | | Evaluations | | | | | | | |
|---|---|---|---|---|---|---|---|---|---|---|---|---|---|---|---|---|---|
| | Nb₂O₅ | MoO₃ | K₂CO₃ | K₂MoO₄ | Amount of Fluxing Agents to Amount of Nb₂O₅*1 | K/Mo | Mo/Nb | Firing Conditions | | SEM | | | | XRF | | | XRD |
| | | | | | | | | Temperature | Holding Time | Shape | Short Length | Long Length | Aspect Ratio Long Length/Short Length | KxNbyOz | | MoO₃ | Composition |
| | | | | | | | | | | | | | | Nb₂O₅ | K₂O | | |
| | 9 | 9 | 9 | 9 | parts by mass | molar Ratio | molar Ratio | °C | h | | µm | µm | | mass% | mass% | mass% | |
| Example 7 | 10 | - | - | 5 | 50 | 2 | 0.2 | 900 | 10 | Wire Shape | 1 | 10 | 10 | 88.4 | 8.1 | 3.43 | K₂Nb₄O₁₁ |
| Example 8 | 5 | - | - | 10 | 200 | 2 | 0.7 | 900 | 10 | Wire Shape | 0.3 | 20 | 67 | 82.5 | 14.3 | 3.12 | K₂Nb₄O₁₁ |
| Example 9 | 5 | - | - | 25 | 500 | 2 | 1.7 | 900 | 10 | Wire Shape | 0.2 | 10 | 50 | 81.7 | 13.8 | 4.45 | K₂Nb₄O₁₁ |
| Example 10 | 10 | - | - | 5 | 50 | 2 | 0.2 | 900 | 10 | Wire Shape | 1 | 15 | 15 | 90.3 | 7.8 | 1.77 | K₂Nb₄O₁₁ |
| Example 11 | 5 | - | - | 10 | 200 | 2 | 0.7 | 900 | 10 | Wire Shape | 0.1 | 5 | 50 | 82.9 | 12.5 | 2.97 | K₂Nb₄O₁₁ |
| Example 12 | 10 | - | - | 5 | 50 | 2 | 0.2 | 1300 | 10 | Columnar Shape | 30 | 60 | 2 | 90.1 | 6.2 | 0.32 | K₂Nb₄O₁₁ |
| Example 13 | 10 | - | - | 10 | 100 | 2 | 0.3 | 1300 | 10 | Columnar Shape | 30 | 100 | 3 | 86.8 | 8.8 | 1.19 | K₂Nb₄O₁₁ |
| Example 14 | 5 | - | - | 10 | 200 | 2 | 0.7 | 1300 | 10 | Wire Shape | 0.5 | 10 | 20 | 87.1 | 8.6 | 1.30 | K₂Nb₄O₁₁ |
| Example 15 | 10 | 10.2 | 9.8 | - | 200 | 2 | 0.9 | 900 | 10 | Wire Shape | 2 | 50 | 25 | 82.2 | 12.5 | 5.21 | K₂Nb₄O₁₁ |
| Example 16 | 10 | 13.5 | 6.5 | - | 200 | 1 | 1.2 | 900 | 10 | Wire Shape | 2 | 10 | 5 | 82.5 | 14.3 | 3.12 | K₂Nb₄O₁₁ |
| Example 17 | 10 | 6.7 | 3.3 | - | 100 | 1 | 0.6 | 1100 | 10 | Ribbon Shape | 30 | 150 | 5 | 82.9 | 12.5 | 2.97 | K₂Nb₄O₁₁ |

| | | | | | | | | | | | | | | | | | |
|---|---|---|---|---|---|---|---|---|---|---|---|---|---|---|---|---|---|
| *1 Amount of fluxing agents per 100 parts by mass of Nb₂O₅ | | | | | | | | | | | | | | | | | |

Table 2 lists the shape and the size of the particles of the Examples as determined from the SEM images. In the instance where particles with different shapes were recognized to exist, a representative shape (most frequently observed shape) is listed.

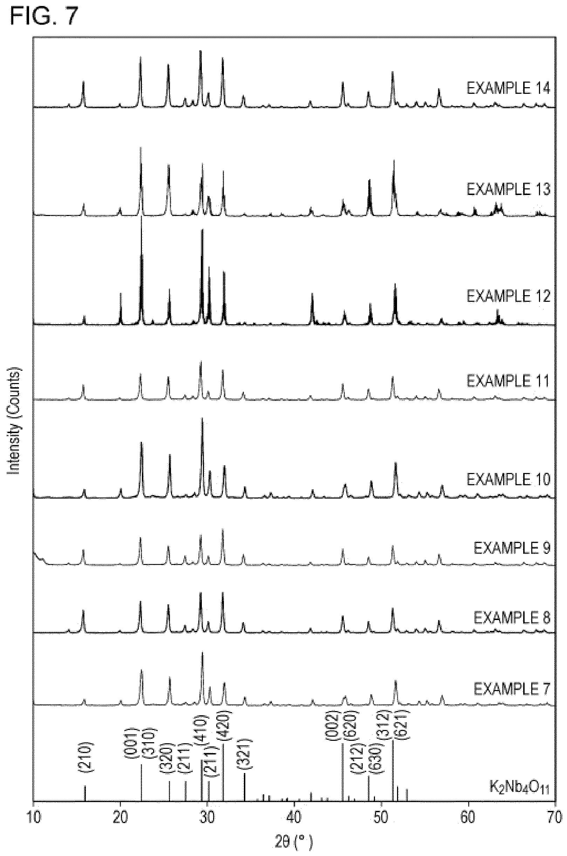

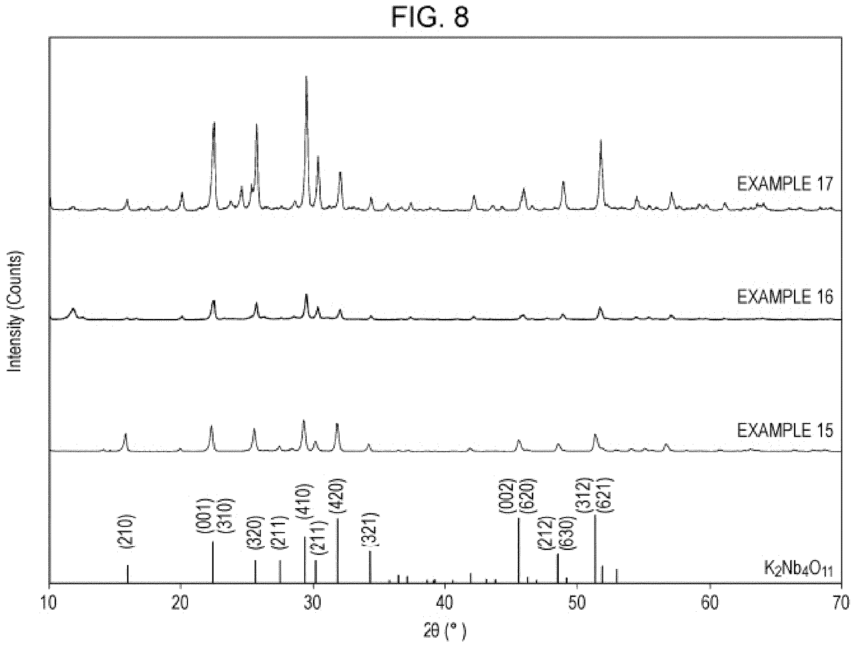

Figs. 7 and 8 show the results of the XRD analysis. In each of the samples of Examples 7 to 17, a peak corresponding to K₂Nb₄O₁₁ was observed.

The results of the SEM observation and the XRD analysis confirmed that the powders obtained in Examples 7 to 17 included niobate particles containing K₂Nb₄O₁₁ and having a columnar shape, a wire shape, or a ribbon shape.

Furthermore, the results demonstrated that the niobate particles of Examples 7 to 17 contained niobium, potassium, and molybdenum in the amounts shown in Table 2, calculated as oxides, as determined by the XRF analysis.

The results of Examples 7 to 17 demonstrated that by firing a niobium compound in the presence of a molybdenum compound and a potassium compound, molybdenum-containing potassium niobate particles can be produced by firing, even at a relatively low firing temperature of 900 to 1300°C.

Furthermore, the results demonstrated that by firing a niobium compound in the presence of a molybdenum compound and a potassium compound, the shape of the potassium niobate particles that are produced can be easily controlled.

### <3. Production of K₄Nb₆O₁₇ Particles>

### [Example 18]

A powder of Example 18 was prepared by performing the same operation as in Example 7, except that the amounts of use of the raw material compounds and the firing conditions were changed from those of Example 7, as shown in Table 3.

### [Example 19]

A powder of Example 19 was prepared by performing the same operation as in Example 2, except that the amounts of use of the raw material compounds and the firing conditions were changed from those of Example 2, as shown in Table 3.

### <Results>

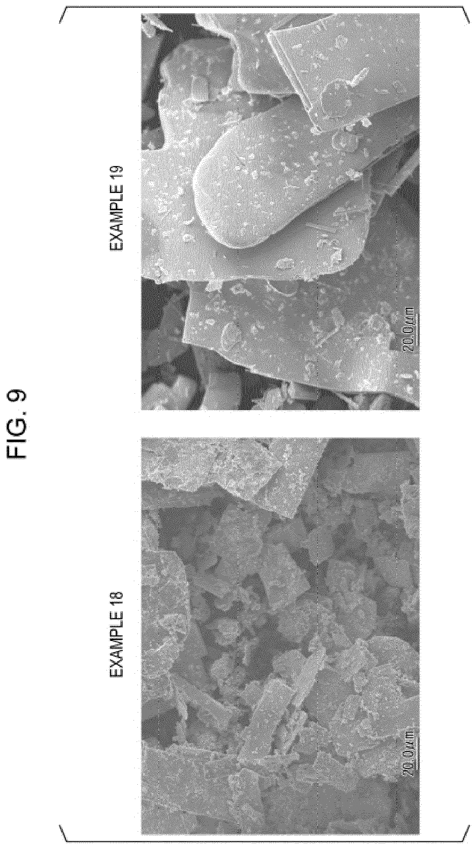

SEM images of the powders prepared in Examples 18 and 19 are shown in Fig. 9.

The results of the evaluations described above are shown in Table 3. The symbol "-" indicates that the compound was not used.

**[Table 3]**

| | Production Conditions | | | | | | | | | Evaluations | | | | | |
|---|---|---|---|---|---|---|---|---|---|---|---|---|---|---|---|
| | Nb₂O₅ | MoO₃ | K₂CO₃ | K₂MoO₄ | Amount of Fluxing Agents to Amount of Nb₂O₅*1 | K/Mo | Mo/Nb | Firing Conditions | | SEM | | XRF | | | XRD |
| | | | | | | | | Temperature | Holding Time | Shape | Particle Size | KxNbyOz | | MoO₃ | Composition |
| | | | | | | | | | | | | Nb₂O₅ | K₂O | | |
| | 9 | 9 | 9 | 9 | parts by mass | molar Ratio | molar Ratio | °C | h | | µm | mass% | mass% | mass% | |
| Example 18 | 5 | - | - | 25 | 500 | 2 | 0.2 | 1100 | 10 | Plate Shape | 30 | 78.3 | 12.80 | 6.20 | K₄Nb₆O₁₇ |
| Example 19 | 10 | 3.4 | 6.6 | - | 100 | 4 | 0.3 | 1100 | 10 | Plate Shape | 200 | 90.3 | 7.84 | 1.77 | K₄Nb₆O₁₇ |

| | | | | | | | | | | | | | | | |
|---|---|---|---|---|---|---|---|---|---|---|---|---|---|---|---|
| *1 Amount of fluxing agents per 100 parts by mass of Nb₂O₅ | | | | | | | | | | | | | | | |

Table 3 lists the shape and the size of the particles of Examples 18 and 19 as determined from the SEM images. In the instance where particles with different shapes were recognized to exist, a representative shape (most frequently observed shape) is listed.

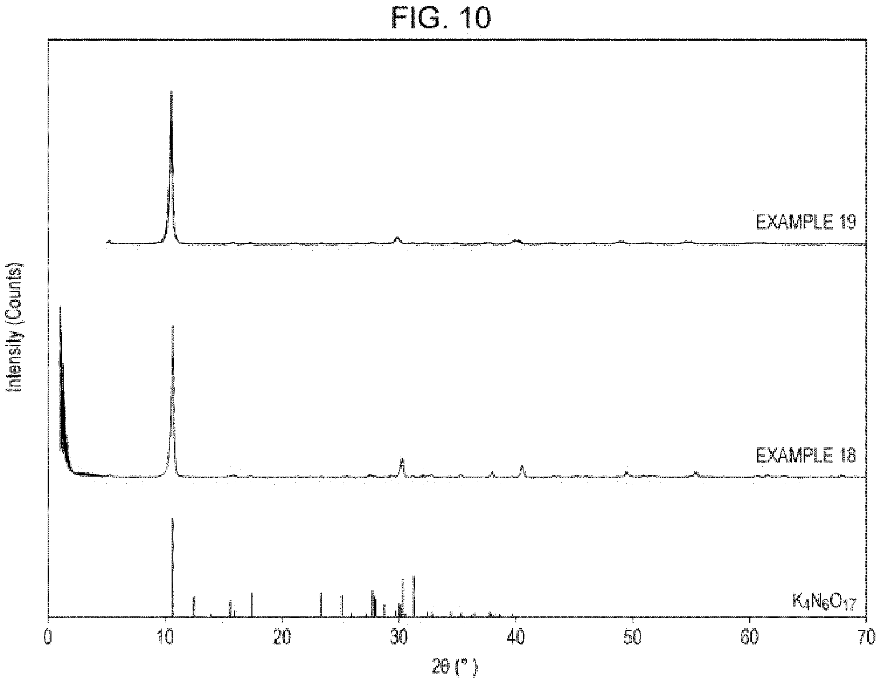

Fig. 10 shows the results of the XRD analysis. In each of the samples of Examples 18 and 19, a peak corresponding to K₄Nb₆O₁₇ was observed.

The results of the SEM observation and the XRD analysis confirmed that the powders obtained in the Examples included niobate particles containing K₄Nb₆O₁₇ and having a plate shape.

Furthermore, the results demonstrated that the niobate particles of Examples 18 and 19 contained niobium, potassium, and molybdenum in the amounts shown in Table 3, calculated as oxides, as determined by the XRF analysis.

The results of Examples 18 and 19 demonstrated that by firing a niobium compound in the presence of a molybdenum compound and a potassium compound, molybdenum-containing potassium niobate particles can be produced by firing, even at a relatively low firing temperature of 1100°C.

Furthermore, the results demonstrated that by firing a niobium compound in the presence of a molybdenum compound and a potassium compound, the shape of the potassium niobate particles that are produced can be easily controlled.

### <4. Production of KNb₃O₈ Particles>

### [Example 20]

A powder of Example 20 was prepared by performing the same operation as in Example 7, except that the amounts of use of the raw material compounds and the firing conditions were changed from those of Example 7, as shown in Table 4.

### [Example 21]

A powder of Example 21 was prepared by performing the same operation as in Example 2, except that the amounts of use of the raw material compounds and the firing conditions were changed from those of Example 2, as shown in Table 4.

### <Results>

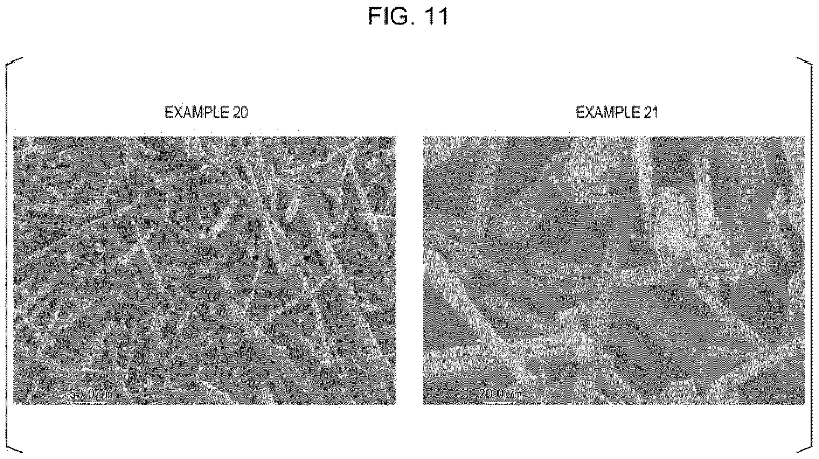

SEM images of the powders prepared in Examples 20 and 21 are shown in Fig. 11.

The results of the evaluations described above are shown in Table 4. The symbol "-" indicates that the compound was not used.

**[Table 4]**

| | Production Conditions | | | | | | | | | Evaluations | | | | | | | |
|---|---|---|---|---|---|---|---|---|---|---|---|---|---|---|---|---|---|
| | Nb₂O₅ | MoO₃ | K₂CO₃ | K₂MoO₄ | Amount of Fluxing Agents to Amount of Nb₂O₅*1 | K/Mo | Mo/Nb | Firing Conditions | | SEM | | | | XRF | | | XRD |
| | | | | | | | | Temperature | Holding Time | Shape | Short Length | Long Length | Aspect Ratio Long Length/Short Length | KxNbyOz | | MoO₃ | Composition |
| | | | | | | | | | | | | | | Nb₂O₅ | K₂O | | |
| | 9 | 9 | 9 | 9 | parts by mass | molar Ratio | molar Ratio | °C | h | | µm | µm | | mass% | mass% | mass% | |
| Example 20 | 10 | - | - | 10 | 100 | 2 | 0.3 | 1100 | 10 | Ribbon Shape | 10 | 1000 | 100 | 90.1 | 9.30 | 0.50 | KNb₃O₈ |
| Example 21 | 10 | 5.1 | 4.9 | - | 100 | 2 | 0.4 | 1100 | 10 | Ribbon Shape | 15 | 300 | 20 | 89.9 | 9.59 | 0.43 | KNb₃O₈ |

| | | | | | | | | | | | | | | | | | |
|---|---|---|---|---|---|---|---|---|---|---|---|---|---|---|---|---|---|
| *1 Amount of fluxing agents per 100 parts by mass of Nb₂O₅ | | | | | | | | | | | | | | | | | |

Table 4 lists the shape and the size of the particles of Examples 20 and 21 as determined from the SEM images. In the instance where particles with different shapes were recognized to exist, a representative shape (most frequently observed shape) is listed.

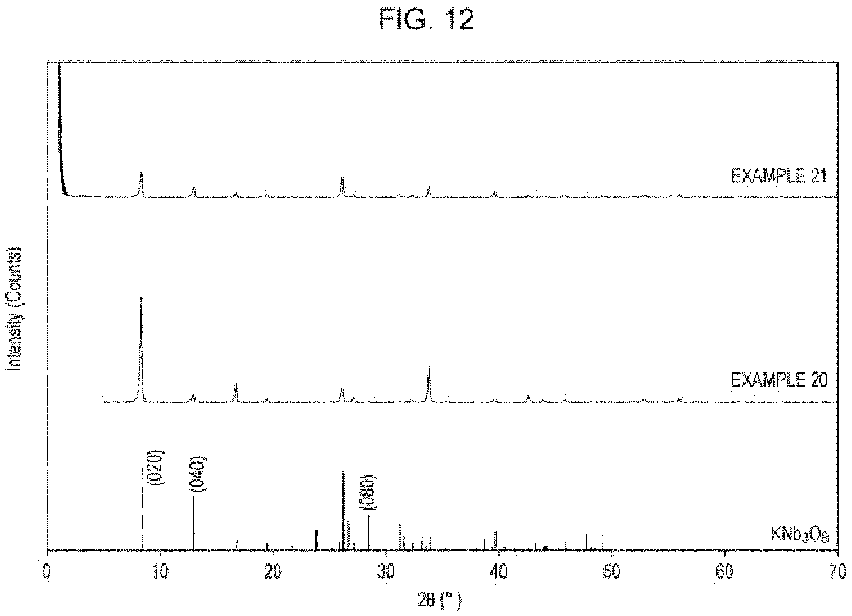

Fig. 12 shows the results of the XRD analysis. In each of the samples of Examples 20 and 21, a peak corresponding to KNb₃O₈ was observed.

The results of the SEM observation and the XRD analysis confirmed that the powders obtained in the Examples included niobate particles containing KNb₃O₈ and having a ribbon shape.

Furthermore, the results demonstrated that the niobate particles of Examples 20 and 21 contained niobium, potassium, and molybdenum in the amounts shown in Table 4, calculated as oxides, as determined by the XRF analysis.

The results of Examples 20 and 21 demonstrated that by firing a niobium compound in the presence of a molybdenum compound and a potassium compound, molybdenum-containing potassium niobate particles can be produced by firing, even at a relatively low firing temperature of 1100°C.

Furthermore, the results demonstrated that by firing a niobium compound in the presence of a molybdenum compound and a potassium compound, the shape of the potassium niobate particles that are produced can be easily controlled.

The niobate particles of Examples 1 to 21 contain molybdenum and, therefore, are expected to exhibit various effects of molybdenum, such as catalytic activity.

The constituents, combinations thereof, and the like in the embodiments are merely illustrative. Addition, omission, and/or substitution of one or more constituents as well as other modifications may be made without departing from the spirit of the present invention. Furthermore, the present invention is not limited to the embodiments and is only limited by the scope of the claims.

## Claims

1. Niobate particles comprising molybdenum and being represented by KₓNa₍₁₋ₓ₎Nb_{y}O_{z}, where X = 0 to 1, y = 1 to 10, and z = 3 to 20.

2. The niobate particles according to Claim 1, wherein the niobate particles comprise at least one selected from the group consisting of
KₓNa₍₁₋ₓ₎NbO₃ particles, where X = 0 to 1,
K₂Nb₄O₁₁ particles,
K₄Nb₆O₁₇ particles, and
KNb₃O₈ particles.

3. The niobate particles according to Claim 2, wherein the niobate particles comprise at least one selected from the group consisting of
KₓNa₍₁₋ₓ₎NbO₃ particles having a cubic shape, where X = 0 to 1,
K₂Nb₄O₁₁ particles having a columnar shape, a wire shape, or a ribbon shape,
K₄Nb₆O₁₇ particles having a plate shape, and
KNb₃O₈ particles having a columnar shape, a wire shape, or a ribbon shape.

4. The niobate particles according to Claim 2 or 3, wherein the niobate particles comprise KₓNa₍₁₋ₓ₎NbO₃ particles having a cubic shape, and the KₓNa₍₁₋ₓ₎NbO₃ particles have a particle size of 0.1 to 100 µm.

5. The niobate particles according to Claim 2 or 3, wherein the niobate particles comprise K₂Nb₄O₁₁ particles having a columnar shape, a wire shape, or a ribbon shape, and the K₂Nb₄O₁₁ particles have a long length of 1.0 to 2000 µm, a short length of 0.05 to 100 µm, and an aspect ratio of 2 to 100, where the aspect ratio is a ratio of the long length to the short length.

6. The niobate particles according to Claim 2 or 3, wherein the niobate particles comprise K₄Nb₆O₁₇ particles having a plate shape, and the K₄Nb₆O₁₇ particles have a particle size of 1 to 1000 µm.

7. The niobate particles according to Claim 2 or 3, wherein the niobate particles comprise KNb₃O₈ particles having a columnar shape, a wire shape, or a ribbon shape, and the KNb₃O₈ particles have a long length of 10 to 10000 µm, a short length of 5 to 100 µm, and an aspect ratio of 2 to 100, where the aspect ratio is a ratio of the long length to the short length.

8. The niobate particles according to Claim 1 or 2, wherein, in the niobate particles, a content of the molybdenum, in terms of a content percentage calculated as MoO₃, is 0.01 to 20 mass% as determined by an XRF analysis of the niobate particles, the content percentage being based on a total mass of the niobate particles taken as 100 mass%.

9. The niobate particles according to Claim 1 or 2, wherein, in the niobate particles, a content of niobium, in terms of a content percentage calculated as Nb₂O₅, is 50 to 99 mass% as determined by an XRF analysis of the niobate particles, the content percentage being based on a total mass of the niobate particles taken as 100 mass%.

10. The niobate particles according to Claim 1 or 2, wherein, in the niobate particles, a content of potassium and/or sodium, in terms of a total content percentage calculated as K₂O and Na₂O, is 0.5 to 40 mass% as determined by an XRF analysis of the niobate particles, the total content percentage being based on a total mass of the niobate particles taken as 100 mass%.

11. A method for producing niobate particles, which is a method for producing the niobate particles according to Claim 1, the method comprising firing a niobium compound in the presence of a molybdenum compound and of a potassium compound and/or a sodium compound.

12. The method for producing niobate particles according to Claim 11, wherein the molybdenum compound is at least one compound selected from the group consisting of molybdenum trioxide, potassium molybdate, and sodium molybdate.

13. The method for producing niobate particles according to Claim 11 or 12, wherein the sodium compound is sodium carbonate or sodium molybdate, and the potassium compound is potassium carbonate or potassium molybdate.

14. The method for producing niobate particles according to Claim 11 or 12, wherein a firing temperature for firing the niobium compound is 700 to 1500°C.

15. The method for producing niobate particles according to Claim 11 or 12, the method comprising:
a step of mixing the niobium compound with the molybdenum compound and with the potassium compound and/or the sodium compound to form a mixture; and
a step of firing the mixture, wherein
a molar ratio of molybdenum atoms to niobium atoms in the mixture, which is a molar ratio denoted as molybdenum/niobium, is 0.01 to 5.
